# EUROPÄISCHE PATENTSCHRIFT

(11) **EP 1 284 561 B1**
(45) Veröffentlichungstag und Bekanntmachung des Hinweises auf die Patenterteilung: **22.03.2006**
(21) Anmeldenummer: 02102025.0
(22) Anmeldetag: 11.07.2002
(51) Int. Cl.: H04L 12/64, H04L 12/56, H04L 29/06

(54) **Verfahren und Anordnung zur Steuerung von Datenpaketen**
Method and apparatus for controlling data packets
Procedé et dispositif pour commander les paquets de données

(30) Priorität: 14.08.2001 DE 10139936
(43) Veröffentlichungstag der Anmeldung: 19.02.2003
(73) Patentinhaber: SIEMENS AKTIENGESELLSCHAFT, 80333 München (DE)
(72) Erfinder: Guse, Merten, 14471, Potsdam (DE)

(56) Entgegenhaltungen:
- WO-A-01/05114
- WO-A-01/43334
- WO-A-02/23862

## Beschreibung

Die Erfindung betrifft ein Verfahren zur Steuerung von Datenpaketen in Gateways, insbesondere von RTP(Real Time Transport Protocol)-Datenpaketen, und eine Anordnung hierfür.

In einem Rechner-Netzwerk, beispielsweise einem Ethernet, werden heute schon häufig Sprach- und Videodaten übertragen. Gerade bei einer Videokonferenz kommt es auf eine schnelle Übertragung der Daten an, damit die Teilnehmer keine Zeitsprünge und/oder Verzögerungen bemerken, sondern vielmehr eine kontinuierliche Übertragung empfinden. Die Datenpakete für die Sprach- und Videoübertragung sind in der Regel mit einem RT-Protokoll gekennzeichnet.

Die über das Ethernet transportierten RTP-Datenpakete werden in einem Gateway zu einem dort angeordneten Host-Prozessor geleitet. Der Host-Prozessor filtert die RTP-Datenpakete aus dem Datenstrom des Ethernet aus und führt die herausgefilterten Pakete zur Weiterverarbeitung Subsystemen zu, beispielsweise Digital-Signal-Prozessoren (DSP). Die Subsysteme können die empfangenen Daten weiterverarbeiten, beispielsweise eine Umkodierung in PCM(Pulse Code Modulation)-Darstellung durchführen, und anschließend in konventioneller Art weiterleiten.

In der Gegenrichtung kodieren die DSPs Sprach- und Videosignale in RTP-Datenpakete um und senden sie an einen Host-Prozessor. Dieser wiederum leitet die Datenpakete an die Schnittstelleneinrichtung zum Ethernet weiter, um die Datenpakete in den Ethernet-Datenstrom einzufügen.

Der Host-Prozessor ist beim Empfangen und beim Senden von RTP-Daten beteiligt. Das führt gerade bei einem hohen Aufkommen von RTP-Daten zu einer hohen Auslastung des Host-Prozessors, dessen Leistungskapazität nunmehr anderen Prozessen nicht zur Verfügung steht.

Aufgabe der vorliegenden Erfindung ist es daher, ein Verfahren und eine Anordnung für die Steuerung von Datenpaketen in einem Gateway anzugeben, durch das der Host-Prozessor erheblich entlastet wird, was wiederum zu einer deutlichen Performancesteigerung bei anderen Aufgaben führt.

Diese Aufgabe wird durch ein Verfahren nach Anspruch 1 und eine Anordnung nach Anspruch 4 gelöst.

Ein wesentlicher Gedanke der Erfindung besteht darin, daß in dem erfindungsgemäßen Verfahren die RTP-Datenpakete in dem Gateway in Empfangsrichtung an dem Host-Prozessor vorbei an die weiterverarbeitenden Subsysteme geleitet werden. In Senderichtung werden die RTP-Datenpakete von den Subsystemen an dem Host-Prozessor vorbei an die Schnittstelleneinrichtung zur Einspeisung in den netzinternen (Ethernet-)Datenstrom weitergeleitet. Hierfür ist ein Datenpaket-Vermittler der Schnittstelleneinrichtung nachgeordnet, der RTP-Daten an die Subsysteme und andere Datenpakete an den Host-Prozessor weiterleitet. In Gegenrichtung bzw. Senderichtung empfängt der Datenpaket-Vermittler sowohl von den Subsystemen wie dem Host-Prozessor Datenpakete, die er an die Schnittstelleneinrichtung weiterleitet, wobei er RTP-Datenpakete bevorzugt zur Einspeisung in den (Ethernet-)Datenstrom an die Schnittstelleneinrichtung sendet.

Hierbei werden die Adressen der Datenpakete mit Adressen verglichen, die in einem Adressenspeicher abgelegt sind. Der Datenpaketvermittler leitet die Datenpakete mit Adressen, die abgespeichert sind, an die Subsysteme bzw. DSPs weiter. Datenpakete, deren Adressen nicht zu dem abgespeicherten Adressen gehören, können ungehindert den Host-Prozessor erreichen.

Eine vorteilhafte Ausführungsform der Erfindung filtert in Empfangsrichtung RTP-Datenpakete aus dem Datenstrom des Netzwerkes und leitet diese herausgefilterten Datenpakete direkt an eine Bank von DSPs zur Weiterverarbeitung weiter.

In einer vorteilhaften Ausführungsform der vorliegenden Erfindung werden in Senderichtung die von den DSPs kodierten Datenpakete in RTP-Datenpakete transformiert. Diese werden anschließend in den Datenstrom des Netzwerkes eingeleitet. Hierbei können die RTP-Datenpakete bevorzugt in das Netzwerk eingeleitet werden, damit die Echtzeitanwendungen für den Benutzer komfortabler durchführbar sind.

Vorzugsweise wird die erfindungsgemäße Anordnung in einem Netzwerk realisiert, das ein lokales Netzwerk auf Basis des Ethernet-Protokolls ist.

In einer weiteren vorteilhaften Ausführungsform weist die erfindungsgemäße Anordnung eine Bank von DSPs auf, an die der Datenpaket-Vermittler RTP-Datenpakete zur Weiterverarbeitung direkt weiterleitet.

In einer besonders vorteilhaften Ausführungsform weist die erfindungsgemäße Anordnung mindestens einen weiteren Datenpaket-vermittler auf, so daß die unterschiedlichen Datenpaket-Vermittler unterschiedliche Arten von Datenpaketen an entsprechende Subsysteme weiterleiten können.

Vorteile und Zweckmäßigkeiten der Erfindung ergeben sich im übrigen aus den Unteransprüchen sowie der nachfolgenden Beschreibung anhand der Figuren.
Fig. 1 zeigt schematisch eine herkömmliche Schnittstellen-Prozessor-Anordnung für ein Gateway,
Fig. 2 zeigt schematisch eine erfindungsgemäße Anordnung für ein Gateway,
Fig. 3 ist eine Skizze für die Signalleitung in Empfangsrichtung,
Fig. 4 ist eine-Skizze für die Signalleitung in Senderichtung,
Fig. 5 zeigt ein Flußdiagramm zur Adreßbestimmung mit Hilfe des Adressenspeichers,
Fig. 6 zeigt schematisch die Prozeßsteuerung in einem erfindungsgemäßen Datenpaket-Vermittler und
Fig. 7 zeigt schematisch eine zweite Ausführungsform einer erfindungsgemäßen Anordnung für ein Gateway.

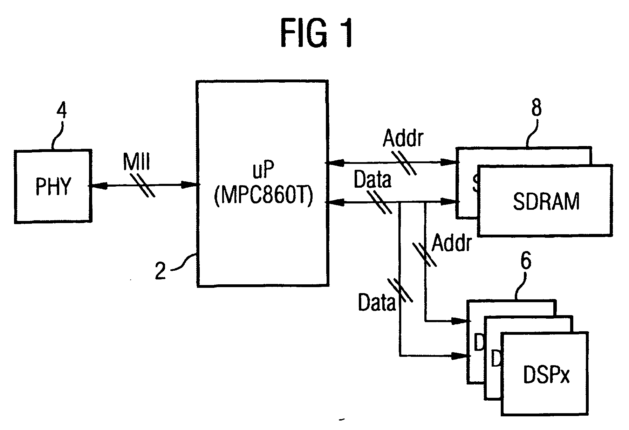

Fig. 1 zeigt eine herkömmliche Schnittstellen-Prozessor-Anordnung für ein Gateway mit einem Mikroprozessor (Host-Prozessor) 2, der mit einer Schnittstelleneinrichtung (Physical Interface Device) 4 über ein Media Independent Interface (MII) verbunden ist. Weiterhin ist der Host-Prozessor 2 mit einer Bank von Subsystemen 6 verbunden. Die Subsysteme 6 können beispielsweise Digital-Signal-Prozessoren (DSP) sein, die RTP-Datenpakete weiterverarbeiten. Zusätzlich ist der Host-Prozessor 2 mit einem Speicher (SDRAM) 8 verbunden, in dem ankommende Datenpakete zwischengespeichert werden können.

Aus der Figur ist deutlich ersichtlich, daß alle Datenpakete aus dem Ethernet-Datenstrom bzw. von der Schnittstelleneinrichtung 4, auch die für die Subsysteme 6 bestimmten, über den Host-Prozessor 2 geleitet werden.

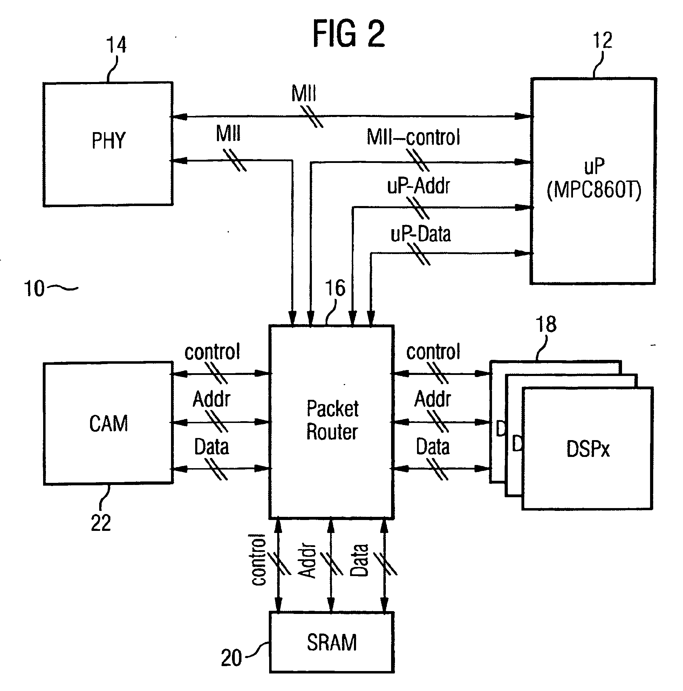

Fig. 2 zeigt eine erfindungsgemäße Anordnung 10 für ein Gateway mit einem Host-Prozessor 12, einer Schnittstelleneinrichtung 14 und einem Datenpaket-Vermittler (Packet Router) 16. Die Schnittstelleneinrichtung 14 ist sowohl mit dem Host-Prozessor 12 als auch mit dem Datenpaket-Vermittler 16 mittels MII verbunden. Der Datenpaket-Vermittler 16 ist mit dem Host-Prozessor 12, mit Subsystemen (DSP) 18, einem Zwischenspeicher (SRAM) 20 und einem Adressenspeicher (CAM) 22 verbunden.

Der Datenpaket-Vermittler 16 erhält von der Schnittstelleneinrichtung 14 alle für diese Anordnung 10 bestimmten Datenpakete. Er vergleicht die Adressen der Datenpakete mit einer Liste von Adressen, die im Adressenspeicher 22 abgelegt sind. Datenpakete mit einer derartigen Adresse werden von dem Datenpaket-Vermittler 16 direkt an das entsprechende Subsystem 18 weitergeleitet. Datenpakete, deren Adresse nicht mit einer Adresse aus dem Adressenspeicher 22 übereinstimmt, werden von dem Datenpaket-Vermittler 16 an den Mikroprozessor 12 weitergeleitet.

Der Adressenspeicher 22 ist ein sogenannter CAM (Content-Adress-Memory) und wird für das Speichern der Verbindungsdaten benötigt. Es ist möglich, einen handelsüblichen CAM einzusetzen. Bei einer Anzahl von 256 und mehr aktiven RTP-Verbindungen ist es erforderlich, schnell eine Entscheidung zu treffen, wohin die Pakete geleitet werden sollen. Die CAM-Funktionalität kann innerhalb des Datenpaket-Vermittlers 16 mit dedizierten RAM-Zellen (Read and Modify Memory) realisiert werden. Der Adressenspeicher 22 muß vom Host-Prozessor 12 verwaltet werden und steht dann für das Verteilen bzw. Routing der RTP-Pakete zur Verfügung. Es ist nicht notwendig den Host-Prozessor 12 mit einem Adressenspeicher 22, der für ein Ethernet geeignet ist, auszustatten.

Ein externer Speicher 20 dient als Buffer für die Datenpakete in beiden Richtungen. Je nach Datenaufkommen und Kosten wird ein SRAM- oder DRAM-Interface eingesetzt. Ein SRAM hat die höhere Zugriffsgeschwindigkeit, ist aber ab einer bestimmten Größe wesentlich teurer als ein DRAM. Die Geschwindigkeitsnachteile des DRAM lassen sich durch den Einsatz eines Cache und/oder einer Pipeline minimieren. Der Aufwand für eine geschwindigkeitsoptimierte DRAM-Implementierung ist wesentlich höher als für eine SRAM-Variante. Wird der Speicher 20 mit SRAM realisiert, steht ausreichend schneller Speicher auch für den Austausch zwischen interen Modulen zur Verfügung. Eine Schätzung ergibt einen Bedarf von etwa 2 bis 4 MByte bei 256 Kanälen für den Spezialfall von RTP-Voice-Paketen. Die Datenbusbreite sollte dem Host-Prozessor 12 und den Datenstrukturen angepaßt werden. Die Anzahl der Adreßleitungen richtet sich nach dem Adreßraum, der zur Verfügung gestellt werden muß.

Die Register innerhalb des Zwischenspeichers 20, die für die Steuerung der Module notwendig sind, müssen direkt gelesen und beschrieben werden können. Der Datenbereich befindet sich im externen Speicher 20. Für jeden Kanal gibt es Memory-Bereiche, auf die der Host-Prozessor 12 zugreifen kann. Es wäre möglich, daß zuerst eine Kanalnummer eingegeben werden muß und der Datenpaket-Vermittler 16 dann die Daten für den Host-Prozessor 12 bereitstellt oder sie in die jeweilige Speicherstruktur überträgt.

Der Host-Prozessor 12 muß Einstellungen in jedem DSP 18 vornehmen können. Es ist aber nicht notwendig, daß er direkt auf den DSP 18 zugreift. Hier kann auch der Zwischenspeicher 20 genutzt werden. Die Struktur kann durch den Datenpaket-Vermittler 16 an die DSPs 18 weitergegeben werden. Die RTP-Pakete einer aktiven Verbindung werden beim Einsatz des Datenpaket-Vermittlers 16 nicht mehr über den Host-Prozessor 12 übertragen.

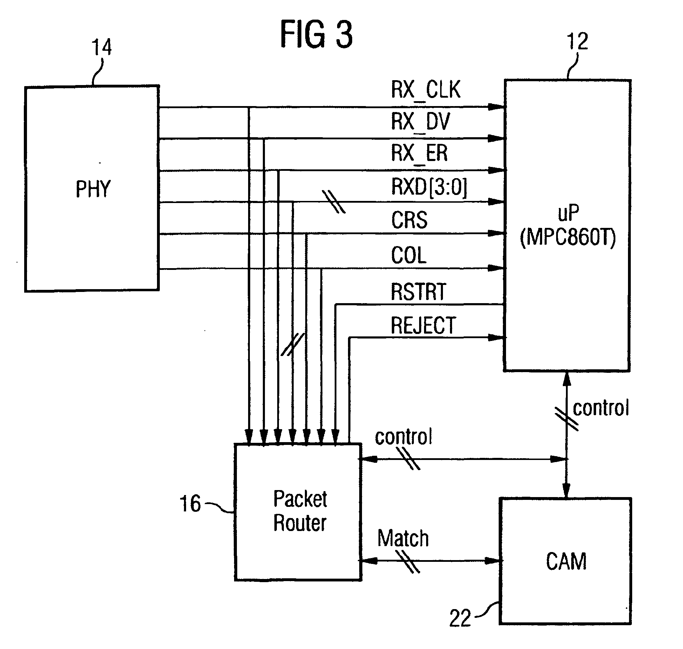

Fig. 3 zeigt skizzenartig Signalleitungen in einer erfindungsgemäßen Anordnung in Empfangsrichtung. Wie bereits aus der Figur 2 ersichtlich, sind sowohl der Mikroprozessor 12 als auch der Datenpaket-Vermittler 16 mit der Schnittstelleneinrichtung 14 jeweils über ein MII verbunden. Beide MII-Interfaces können auf der gleichen Schnittstelleneinrichtung 14 arbeiten. Der Mikroprozessor 12 oder der Datenpaket-Vermittler 16 signalisiert beispielsweise mit einem RSTRT-Signal den Anfang eines gültigen Ethernet-Paketes.

Der Datenpaket-Vermittler 16 "hört" auf der Ethernet-Schnittstelle 14 mit und generiert nach Auswertung aller Informationen das Reject-Signal für den Mikroprozessor 12 oder den eigenen MAC (Media Access Control). Wird das Reject-Signal vor dem Ende des Ethernet-Paketes generiert, werden die verwendeten Buffer-Deskriptoren für neue Pakete verwendet. Die Daten im Buffer werden verworfen. Im Falle einer Implementierung mit einem Motorola PowerPC wird der Prozessorcore nicht mit aufwendigen Adreßvergleichen belastet. Gleich bei Empfang der Daten wird entschieden, ob das Ethernet-Paket jetzt verarbeitet werden muß oder nicht. Das RSTRT-Signal markiert den Start der Empfangsadresse des Ethernet-Paketes. So wird die Kontrolllogik immer neu auf die ankommenden Pakete synchronisiert.

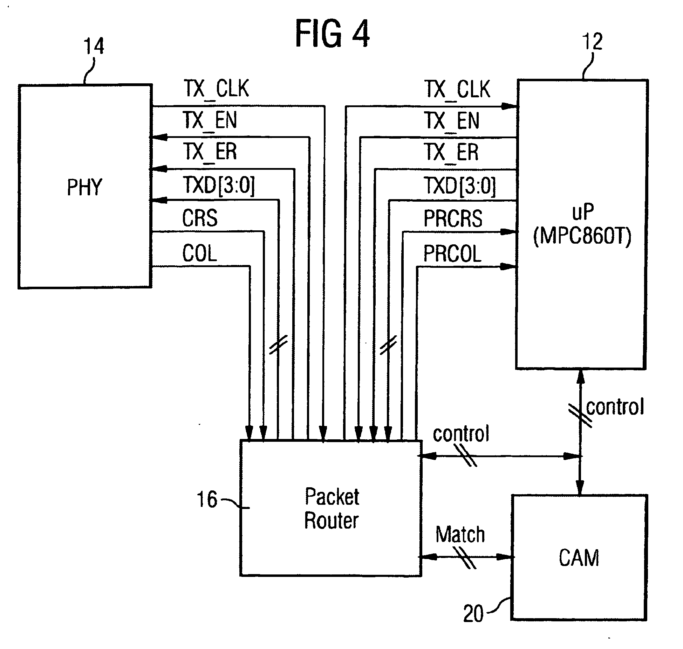

Fig. 4 zeigt ebenfalls die Anordnung wie Fig. 3, allerdings mit den Signalleitungen in Senderichtung. In Senderichtung, also vom Mikroprozessor 12 zur Schnittstelleneinrichtung 14, sorgt eine Steuerung der Kollisionssignale für das Synchronisieren beider MACs, des Host-Prozessors 12 und des Datenpaket-Vermittlers 16, auf einer Schnittstelleneinrichtung 14. Diese Steuerung wird von dem Datenpaket-Vermittler 16 übernommen. Ein TX_EN-Signal wird vom Mikroprozessor 12 generiert. Es markiert ein gültiges Daten-Nibble auf dem MI-Interface in Senderichtung. Wenn der Datenpaket-Vermittler 16 gerade ein Datenpaket versendet, wird im Mikroprozessor 12 mit einem CRS(Carrier Receive Sense)-Signal und einem COL(Collision)-Signal signalisiert, daß zur Zeit das Übertragungsmedium verwendet wird. Der MAC des Mikroprozessors 12 geht somit in den Kollisions-Zyklus und wiederholt seine letzte Übertragung.

Im Fall einer Kollision aus der Übertragungsstrecke (Schnittstelleneinrichtung 14 signalisiert Kollision), wird diese transparent an den Mikroprozessor 12 weitergeleitet.

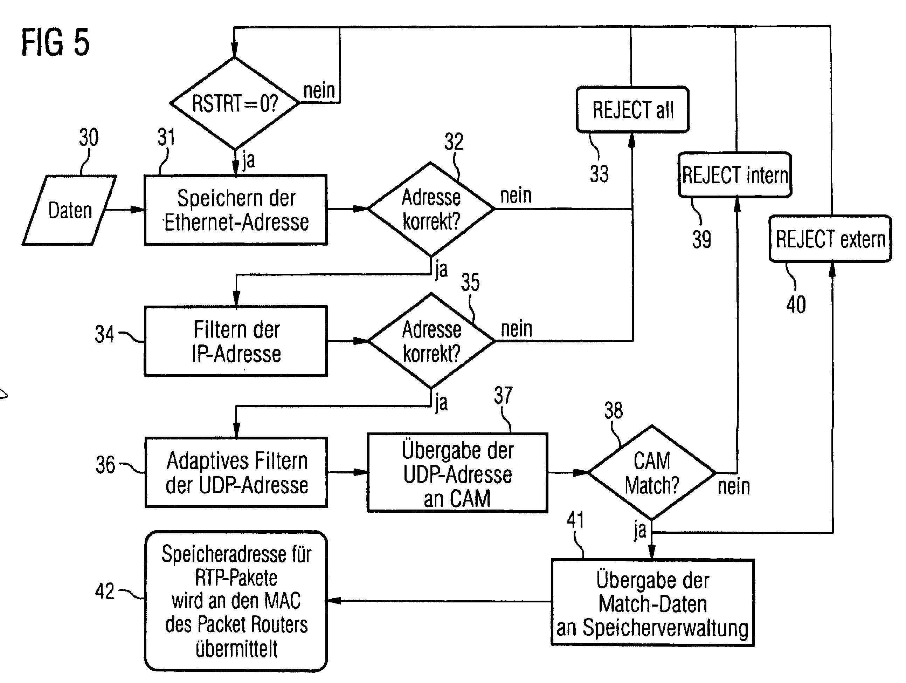

In Fig. 5 ist ein Flußdiagramm zur Adreßbestimmung mit Hilfe des Adressenspeichers 22 aus Fig. 2 dargestellt. Der Adressenspeicher 22 bietet die Möglichkeit, die ankommenden Adressen mit seinen Einträgen zu vergleichen. Innerhalb kürzester Zeit kann signalisiert werden, ob die Adresse im Adreßspeicher 22 steht oder nicht. Dieser Vergleich ist unabhängig von der Software auf dem Host-Prozessor 12 (aus Fig. 2). Der Adressenspeicher 12 kann beispielsweise ein MCM69C232 von Motorola sein. Dieser kann 4096 Einträge mit je 64 Bit Tiefe verwalten. Die mittlere Zugriffszeit ist 160 ns bei einer Taktrate von 50 MHz. Die Suche nach einer gültigen Adresse muß in drei Schritten erfolgen. Als erstes muß im ankommenden Ethernet-Frame 30 nach einer gültigen Ethernet-Adresse gesucht werden. In der Box 31 wird die Ethernet-Adresse gespeichert. In der Box 32 wird überprüft, ob es sich um eine gültige Adresse handelt. Ist die Adresse nicht korrekt, erfolgt-sofort ein Reject 33 für beide MACs. Als nächstes wird in der Box 34 in dem Frame die IP-Adresse herausgefiltert, um diese in der Box 35 auf Gültigkeit zu überprüfen. Stimmt diese nicht, erfolgt das Reject 33 für beide MACs.

Da der IP-Header eine variable Länge haben kann, ist die Position des UDP-Destination-Port nicht fix. Das bedeutet, daß der Datenpaket-Vermittler 16 sich bei dem Frame erneut auf die Position des UDP-Destination-Port einstellen muß. Da es sich um viele aktive UDP-Verbindungen handelt, wird zum Auffinden eines gültigen UDP-Destination-Port der Adressenspeicher 22 verwendet. Deshalb wird in der Box 36 die UDP-Adresse herausgefiltert und in der Box 37 an den Adressenspeicher 22 übergeben. Dieser überprüft in der Box 38 die UDP-Adresse, d.h. er vergleicht die übergebene UDP-Adresse mit denen im Adressenspeicher abgelegten Adressen. Wenn der Adressenspeicher 22 keine gültige UDP-Adresse gefunden hat, wird in der Box 39 intern ein Reject-Signal erzeugt. Wenn der Adressen-Zwischenspeicher 22 eine gültige UDP-Destination-Port gefunden hat, wird in der Box 40 ein Reject-Signal für den MAC des Mikroprozessors 12 erzeugt.

Da der UDP-Destination-Port nur 32 Bit groß ist und der Adreß-Zwischenspeicher 22 eine Tiefe von 64 Bit hat, können die verbleibenden 32 Bit zum Speichern zusätzlicher Daten, beispielsweise Verbindungsdaten, Port, DSP usw., genutzt werden. Die Match-Daten werden in der Box 41 an die Speicherverwaltung übergeben und der Adressenspeicher 22 bietet die Möglichkeit, diese Match-Daten auszugeben. In der Box 42 wird die Speicheradresse für RTP-Pakete an dem MRC des Datenpaket-Vermittlers übermittelt. Dieser kann die Daten nun zur Weiterverarbeitung nutzen.

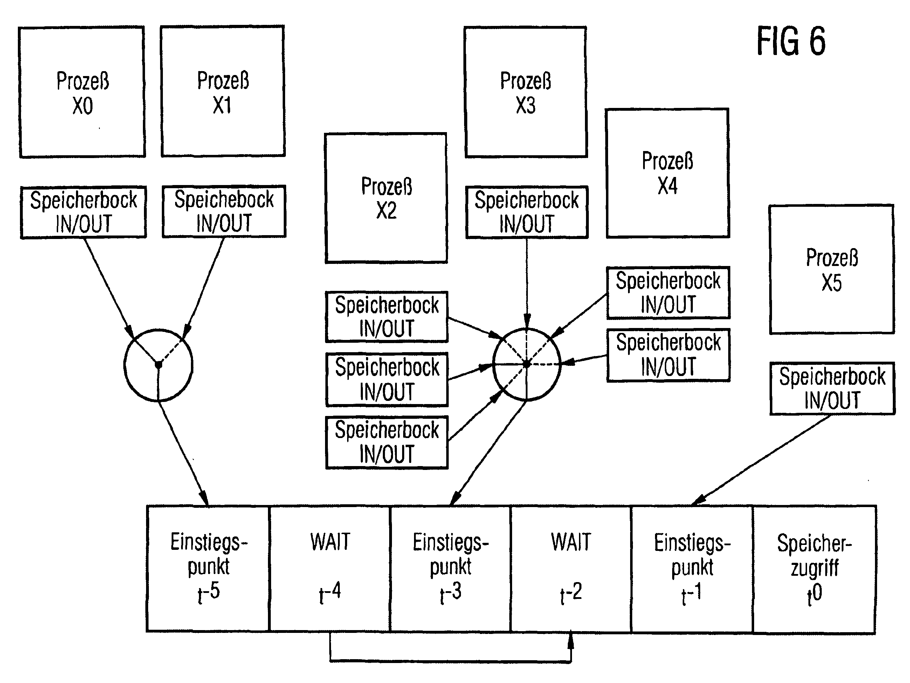

In Fig. 6 ist schematisch eine Prozeßsteuerung für mehrere Prozesse X0 bis X5 in einem erfindungsgemäßen Datenpaket-Vermittler (16 aus Fig. 2) dargestellt. Die einzelnen Zugriffe auf die unterschiedlichen Teile des Datenpaket-Vermittlers 16 müssen gesteuert werden. Mehrere Prozesse können dabei gleichzeitig auf die Ressourcen zugreifen, beispielsweise müssen auf den Speicher (20 aus Fig. 2) mehrere Prozesse schreiben und lesen können. Es darf hier nicht zu Blockaden, Kollision oder Konflikten kommen. Kollisionen lassen sich beispielsweise durch den Einsatz von Buffern und/oder einer Pipeline vermeiden. Diese liegen innerhalb des Chips, um unnötigen Verkehr auf dem Speicher 20 zu vermeiden. Um eine optimale Performance zu erzielen, sollte der Lesezugriff immer als Burst erfolgen. Geschrieben werden darf nur die erforderliche Menge an Daten. Buffer und interne Strukturen können aber auch so ausgelegt werden, daß hier ein Burst auf dem Speicher 20 möglich ist.

Den einzelnen Prozessen X0 - X5 werden je nach Datenaufkommen, ein Speicherblock oder mehrere Speicherblöcke zugeordnet. Die Speicherblöcke sind in ihrer Größe nicht variabel. Die Größe entspricht der eines Burst auf dem externen Speicher 20. Eine zusätzliche Priorität wird durch die Pipeline und den Einstiegspunkt erreicht. Die WAIT-Zyklen (T⁻², T⁻⁴) sind so zu gestalten, daß alle Prozesse X0 bis X5 bedient werden. WAIT-Zyklen werden nur eingefügt, wenn ein Ereignis an dem folgenden Einstiegspunkt ansteht. Die Prozesse X0 und X1 haben sehr niedrige Priorität. Der Prozeß X5 hat die höchste Priorität, aber ein geringes Datenaufkommen. Die Übersicht der Figur 6 nimmt keine Wertung für die Prioritätenverteilung der einzelnen Module innerhalb des Datenpaket-Vermittlers 16 vor.

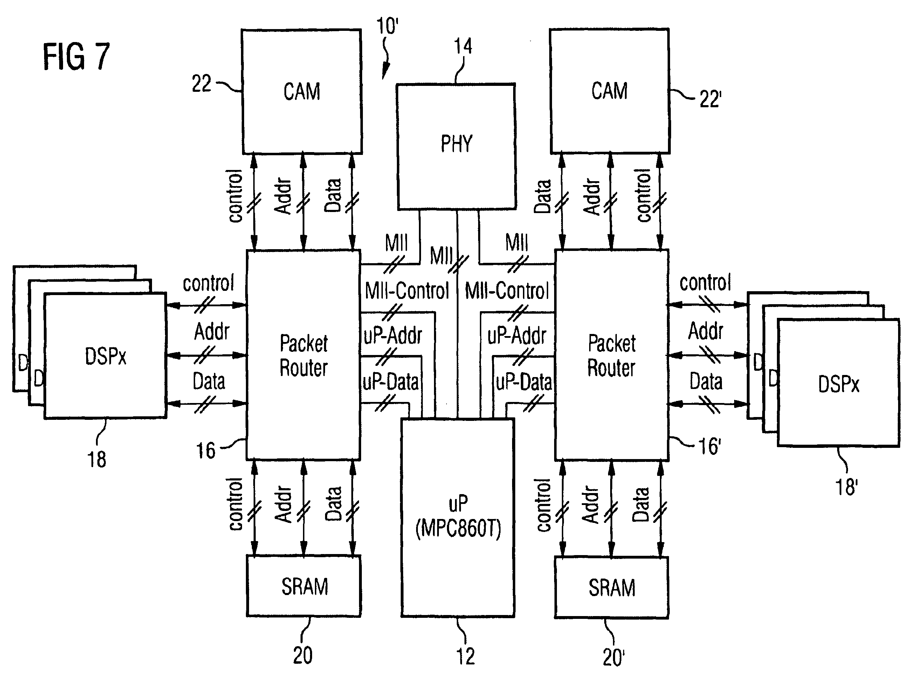

In der Fig. 7 ist eine zweite Ausführungsform einer erfindungsgemäßen Anordnung mit zwei Datenpaket-Vermittlern 16, 16' dargestellt. Sie unterscheidet sich von der ersten Ausführungsform, die in Fig. 2 beschrieben wurde, durch einen zusätzlichen Datenpaket-Vermittler 16', der ebenfalls (wie der Datenpaket-Vermittler 16) sowohl mit der Schnittstelleneinrichtung 14 als auch mit dem Host-Prozessor 12 verbunden ist. Der Datenpaket-Vermittler 16' weist einen eigenen Adressenspeicher 22' auf, mit dem er verbunden ist. Weiterhin ist der Datenpaket-Vermittler 16' mit einem Speicher 20' verbunden, der zur Zwischenspeicherung von Datenpaketen dient. Eine Bank von weiteren Subsystemen bzw. DSPs 18' ist ebenfalls mit dem Datenpaket-Vermittler 16' verbunden.

Wie bereits in Fig. 2 beschrieben, wird der Adressenspeicher 22 vom Host-Prozessor 12 verwaltet. Ebenso wird der Adressenspeicher 22' vom Host-Prozessor 12 verwaltet. Der Host-Prozessor 12 kann in der Anordnung aus Fig. 7 zwei verschiedene Adressenlisten verwalten - eine in dem Adressenspeicher 22, die zweite in dem Adressenspeicher 22'. Deshalb können Datenpakete unterschiedlicher Adressen an unterschiedliche Subsysteme 18 bzw. 18' weitergeleitet werden. Es wäre denkbar, daß der Datenpaket-Vermittler 16 Datenpakete mit Videoinformationen an Videodaten weiterverarbeitende Subsysteme 18 weiterleitet. Auf der anderen Seite kann der Datenpaket-Vermittler 16' beispielsweise Datenpakete mit Sprachinformationen an entsprechende Subsysteme 18' weiterführen, die Voice-Datenpakete weiterverarbeiten.

In der dargestellten Anordnung 10' sind die beiden Datenpaket-Vermittler 16 und 16' parallel zueinander angeordnet. Vorteil ist, daß beide Datenpaket-Vermittler 16, 16' ohne Zeitverzögerung jeweils die Datenpakete aus dem Datenstrom herausfiltern können, deren Adresse in dem jeweiligen Adressenspeicher 22 bzw. 22' abgelegt ist. Allerdings erhält der Host-Prozessor 12 dieser Anordnung 10' alle Datenpakete, da er die vom Datenpaket-Vermittler 16 herausgefilterten Datenpakete vom Datenpaket-Vermittler 16' erhält. Ebenso erhält er die vom Datenpaket-Vermittler 16' herausgefilterten Datenpakete vom Datenpaket-Vermittler 16. Vorteilhaft an dieser Anordnung 10' ist lediglich der Umstand, daß die Subsysteme 18 bzw. 18' mit nur einer geringen Zeitverzögerung die für sie bestimmten Datenpakete erhalten. Die Performance-Steigerung des Mikroprozessors bzw. Host-Prozessors 12 wird allerdings dadurch gemindert, daß er nun aus allen ihn erreichenden Datenpakete die herausfiltern muß, die er weiterzuverarbeiten hat bzw. die Datenpakete, die er verwerfen kann.

Es ist folglich eine Anordnung möglich (nicht dargestellt), in der mehrere Datenpaket-Vermittler in Serie angeordnet sind. Dann filtert der erste, der Schnittstelleneinrichtung nachgeordnete Datenpaket-Vermittler entsprechend seiner in seinem Adreßspeicher abgelegten Adressenliste Datenpakete aus. Alle nicht herausgefilterten Datenpakete leitet er an den zweiten Datenpaket-Vermittler weiter. Dieser wiederum filtert nun seinerseits alle die Datenpakete aus dem Datenstrom aus, deren Adresse mit einer in seinem Adressenspeicher abgelegten Adressenliste übereinstimmt. Vorteil eines Gateways mit seriell angeordneten Datenpaket-Vermittlern ist wiederum eine deutliche Steigerung des Host-Prozessors 12, da er nur die Datenpakete erhält, die für ihn bestimmt sind und nicht vorher herausgefiltert wurden. Nachteilig ist, daß das Herausfiltern bei dem zweiten Datenpaket-Vermittler mit einer Zeitverzögerung erfolgt. Diese Zeitverzögerung wird bei weiteren in Serie angeordneten Datenpaket-Vermittlern noch grö-ßer.

Es wird in den oben beschriebenen Anordnungen zu keiner Zeitverzögerung kommen. Ankommende Pakete werden inpraxi nicht zwischengespeichert sondern sind bis zum Host-Prozessor transparent. Dem Host-Prozessor wird immer signalisiert, ob er das aktuelle Paket verwenden darf oder nicht (im letzteren Falle: REJECT-Signal). Eine parallele Anordnung ist nicht erforderlich und führt in Senderichtung (Host-Prozessor sendet Pakete) zu Problemen. Die Verzögerungszeit bei einer Kastradierung ist nur marginal (infolge Gatterlaufzeiten der Signalverstärker).

## Patentansprüche

1. Verfahren zur Steuerung von Datenpaketen in einem Rechner-Netzwerk, bei dem bestimmte Datenpakete aus der Gesamtheit eines Datenstromes über ein Gateway (10) mit einem Host-Prozessor (12) an Subsysteme (18) zur Weiterverarbeitung weitergeleitet werden bzw. Datenpakete von den Subsystemen (18) über das Gateway (10) in den Datenstrom eingeleitet werden,
**dadurch gekennzeichnet,**
- **dass** Adressen der Datenpakete mit in einem Adressenspeicher (22) abgelegten Adressen verglichen werden, und ein jeweiliges Datenpaket von einem Datenpaket-Vermittler (16) bei Übereinstimmung direkt, d.h. an dem Host-Prozessor (12) vorbei, an eines der Subsysteme (18) weitergeleitet wird und bei Nichtübereinstimmung zum Host-Prozessor (12) durchgelassen wird, bzw.
- **dass** die Datenpakete, die von den Subsystemen (18) kommen, von dem Datenpaket-Vermittler (16) direkt in den Datenstrom eingeleitet werden.

2. Verfahren nach Anspruch 1, das in Empfangsrichtung folgende Schritte umfaßt:
- Herausfiltern von Real Time Transport Protocol, RTP, -Datenpaketen aus dem Datenstrom des Netzwerkes,
- weiterleiten der herausgefilterten RTP-Datenpakete direkt an eine Bank von Digital-Signal-Prozessoren (DSP) (18) zur Weiterverarbeitung.

3. Verfahren nach einem der vorstehenden Ansprüche,
**dadurch gekennzeichnet,**
**dass** das Verfahren in Senderichtung folgende Schritte umfaßt:
- Transformieren der von den Digital-Signal-Prozessoren (18) kodierten Datenpakete in RTP-Datenpakete,
- Einleiten der RTP-Datenpakete in den Datenstrom des Netzwerks.

4. Anordnung zur Steuerung von Datenpaketen in einem Gateway (10) eines Rechnernetzwerkes, die folgendes umfaßt:
- eine Schnittstelleneinrichtung (14), die dazu dient, die Datenpakete zwischen einem Datenstrom des Netzwerkes und dem Gateway (10) auszustauschen,
- einen Host-Prozessor (12),
- einen Speicher (20), der als Zwischenspeicher für Datenpakete in Empfangs- und Senderichtung dient,
- mindestens ein Subsystem (18) zur Verarbeitung von Datenpaketen, insbesondere RTP-Datenpaketen,
**gekennzeichnet durch**
einen Adressenspeicher (22), der die Adressen bestimmter Verbindungen speichert, und
einen Datenpaket-Vermittler (16), der in Empfangsrichtung die Datenpakete von der Schnittstelle (14) mit Adressen, die im Adressenspeicher (22) gespeichert sind, direkt, d. h. an dem Host-Prozessor (12) vorbei, an ein Subsystem (18) weiterleitet und
in Senderichtung die Datenpakete eines Subsystemes (18) direkt zur Schnittstelleneinrichtung (14) zur Einleitung in den Datenstrom weiterleitet.

5. Anordnung nach Anspruch 4,
**dadurch gekennzeichnet,**
**dass** das Netzwerk ein lokales Netzwerk auf Basis des Ethernet-Protokolls ist.

6. Anordnung nach Anspruch 4 oder 5,
**gekennzeichnet durch**
eine Bank von Digital-Signal-Prozessoren (18), an die der Datenpaket-Vermittler (16) RTP-Datenpakete zur - Weiterverarbeitung direkt weiterleitet.

7. Anordnung nach einem der Ansprüche 4 bis 6,
**dadurch gekennzeichnet,**
**dass** die Anordnung mindestens einen weiteren Datenpaket-Vermittler aufweist, der jeweils unterschiedliche Arten von Datenpaketen an Subsysteme weiterleitet, die die Datenpakete weiterverarbeiten.

## Claims

1. Method for controlling data packets in a computer network, in which particular data packets from the whole of a data stream are forwarded via a gateway (10) with a host processor (12) to subsystems (18) for further processing, and data packets are introduced into the data stream by the subsystems (18) via the gateway (10),
**characterized**
- **in that** addresses for the data packets are compared with addresses stored in an address memory (22), and in the event of a match, a data packet router (16) forwards a respective data packet directly, i.e. past the host processor (12), to one of the subsystems (18), and, in the event of there being no match, lets it through to the host processor (12), and
- **in that** the data packet router (16) introduces the data packets coming from the subsystems (18) directly into the data stream.

2. Method according to Claim 1, which comprises the following steps in the reception direction:
- Real Time Transport Protocol, RTP, data packets are filtered out of the network's data stream,
- the filtered RTP data packets are forwarded directly to a bank of digital signal processors (DSP) (18) for further processing.

3. Method according to one of the preceding claims,
**characterized**
**in that** the method comprises the following steps in the transmission direction:
- the data packets coded by the digital signal processors (18) are transformed into RTP data packets,
- the RTP data packets are introduced into the network's data stream.

4. Arrangement for controlling data packets in a gateway (10) in a computer network, which comprises the following:
- an interface device (14) which is used to interchange the data packets between a data stream in the network and the gateway (10),
- a host processor (12),
- a memory (20) serving as a temporary store for data packets in the reception and transmission directions,
- at least one subsystem (18) for processing data packets, particularly RTP data packets,
**characterized by**
an address memory (22) which stores the addresses of particular connections, and
a data packet router (16) which, in the reception direction, forwards the data packets from the interface (14) directly, i.e. past the host processor (12), to a subsystem (18) using addresses stored in the address memory (22), and,
in the transmission direction, forwards the data packets from a subsystem (18) directly to the interface device (14) for introduction into the data stream.

5. Arrangement according to Claim 4,
**characterized**
**in that** the network is a local area network based on the Ethernet protocol.

6. Arrangement according to Claim 4 or 5,
**characterized by**
a bank of digital signal processors (18) to which the data packet router (16) forwards RTP data packets directly for further processing.

7. Arrangement according to one of Claims 4 to 6,
**characterized**
**in that** the arrangement has at least one further data packet router which forwards respectively different types of data packets to subsystems processing the data packets further

## Revendications

1. Procédé pour commander des paquets de données dans un réseau d'ordinateurs, dans lequel certains paquets de données sont transmis, à partir de la totalité d'un flux de données, à des sous-systèmes (18), via une passerelle (10) avec un processeur hôte (12), pour être traités resp. dans lequel des paquets de données sont introduits dans le flux de données par les sous-systèmes (18) via la passerelle (10),
**caractérisé en ce que**
- des adresses des paquets de données sont comparées à des adresses mémorisées dans une mémoire d'adresse (22) et **en ce qu'**un paquet de données respectif, en cas de concordance, est transmis par un commutateur de paquets de données (16) directement, c'est-à-dire en by-passant le processeur hôte (12), à l'un des sous-systèmes (18), et, **en ce que**, en cas de non-concordance, il est laissé passé vers le processeur hôte (12), resp.
- les paquets de données venant des sous-systèmes (18) sont introduits directement dans le flux de données par le commutateur (16) de paquets de données.

2. Procédé selon la revendication 1, qui comprend les étapes suivantes dans le sens de réception :
- filtrage de paquets de données RTP (Real Time Transport Protocol, RTP) du flux de données du réseau,
- transmission des paquets de données RTP filtrés directement à une banque de processeurs de signaux numériques (DSP) (18) pour leur traitement.

3. Procédé selon l'une quelconque des revendications précédentes,
**caractérisé en ce que**
le procédé comprend les étapes suivantes dans le sens d'émission :
- transformation en paquets de données RTP des paquets de données codés par les processeurs (18) de signaux numériques,
- introduction des paquets de données RTP dans le flux de données du réseau.

4. Dispositif pour commander des paquets de données dans une passerelle (10) d'un réseau d'ordinateurs, qui comprend les unités suivantes :
- un dispositif d'interface (14) qui sert à échanger les paquets de données entre un flux de données du réseau et la passerelle (10),
- un processeur hôte (12),
- une mémoire (20) qui sert de mémoire intermédiaire pour les paquets de données dans le sens de réception et dans le sens d'émission,
- au moins un sous-système (18) pour le traitement de paquets de données, notamment de paquets de données RTP,
**caractérisé par**
une mémoire d'adresses (22) qui mémorise les adresses de certaines connexions, et
un commutateur (16) de paquets de données, qui, dans le sens de réception, transmet les paquets de données de l'interface (14) qui ont des adresses mémorisées dans la mémoire d'adresses (22) directement, c'est-à-dire en by-passant le processeur hôte (12), à un sous-système (18) et
qui, dans le sens d'émission, transmet les paquets de données d'un sous-système (18) directement au dispositif d'interface (14) pour leur introduction dans le flux de données.

5. Dispositif selon la revendication 4,
**caractérisé en ce que**
le réseau est un réseau local sur la base du protocole Ethernet.

6. Dispositif selon la revendication 4 ou 5,
**caractérisé par**
une banque de processeurs (18) de signaux numériques, à laquelle le commutateur (16) de paquets de données transmet des paquets de données RTP directement pour leur traitement.

7. Dispositif selon l'une des revendications 4 à 6,
**caractérisé en ce que**
le dispositif présente au moins un autre commutateur de paquets de données, qui transmet respectivement différents types de paquets de données à des sous-systèmes qui traitent les paquets de données.
